# EUROPEAN PATENT SPECIFICATION

(11) **EP 3 088 263 B1**
(45) Date of publication and mention of the grant of the patent: **20.12.2017**
(21) Application number: 16166962.7
(22) Date of filing: 26.04.2016
(51) Int. Cl.: B60T 7/04, B60T 7/06, B60T 8/40, G05G 1/36

(54) **PEDAL CONTROL DEVICE, PARTICULARLY FOR A MOTOR-VEHICLE**
PEDALSTEUERUNGSVORRICHTUNG, INSBESONDERE FÜR EIN MOTORFAHRZEUG
DISPOSITIF DE COMMANDE À PÉDALE, EN PARTICULIER POUR UN VÉHICULE AUTOMOBILE

(30) Priority: 28.04.2015 IT UB20150518
(43) Date of publication of application: 02.11.2016
(73) Proprietor: Bitron S.p.A., 10122 Torino (IT)
(72) Inventor: Cavallo, Emanuele, I-17100 SAVONA (IT); Da Pont, Paolo, I-10123 TORINO (IT); Lo Re, Renato, I-10122 TORINO (IT); Ottella, Marco, I-10122 TORINO (IT); Soresina, Daniel, I-10122 TORINO (IT)
(74) Representative: Vanzini, Christian

(56) References cited:
- EP-A1- 2 749 483
- EP-A2- 1 577 184
- WO-A2-01/44668
- DE-A1- 10 145 156
- DE-A1- 19 748 182
- FR-A1- 2 871 760
- JP-A- H09 207 606
- JP-U- S62 165 133
- US-A1- 2002 108 463
- US-A1- 2005 046 273
- US-A1- 2010 012 442
- US-A1- 2012 152 053

## Description

The present invention relates to a pedal control device for use, in particular, in a motor vehicle, for controlling the braking or the accelerator, for example.

More specifically, the present invention relates to a pedal control device comprising
a bearing structure which is stationary in operation,
a rocker lever mounted rotatably in the bearing structure about a first axis in a predetermined operational angular field, and having a first arm which protrudes from said structure and acts as a pedal, and a second arm which extends opposite the first arm with respect to said first axis,
an electric position sensor connected to said structure and adapted to provide electric signals indicative of the angular position of said lever;
a magnetorheological device adapted to apply a variable resistive torque to said lever and including a support device which is fixed to the bearing structure and contains a magnetorheological fluid, and wherein there is rotatably supported a shaft which is coupled to said lever in such a way that a rotation of the lever can cause a corresponding rotation of said shaft; the support device having associated variable magnetic field generator means adapted to modify the viscosity of said magnetorheological fluid and the resistive torque correspondingly applied to said lever; and
an electronic control unit connected to the position sensor and designed to drive said magnetic field generator means in accordance with a predetermined function of the angular position of the aforesaid lever.

Devices of this type for controlling braking are described, for example, in US 2002/0108463 A1, CN202225859U and US2005/0046273A1.

In these prior art devices, the shaft of the magnetorheological damper device is fixed to the rocker lever which acts as a pedal, and is rotatable about the same axis of rotation as this lever.

These known solutions require a certain amount of available space immediately around the axis of rotation of the pedal, to house the magnetorheological damper device, which may prove problematic in some cases. Furthermore, in these solutions, the angular velocity of the shaft of the magnetorheological damper device in operation is inevitably identical to that of the pedal, and high resistive torques have to be generated by the magnetorheological device.

One object of the present invention is to provide an improved pedal control device which can overcome the aforementioned problems of the prior art devices.

This and other objects are achieved according to the present invention by means of a pedal control device of the type defined initially, primarily characterized in that the aforesaid shaft is rotatable about a second axis parallel with and offset from the aforesaid first axis, and in that between the shaft and the aforesaid rocker lever there is interposed a transmission such that when the lever is operated its rotation speed is different from, and in particular lower than, the rotation speed of said shaft.

In a device according to the present invention, because of the separation between the axis of the pedal and the shaft of the magnetorheological device, the latter can be housed even in positions relatively remote from this axis, which are more convenient in certain situations.

Furthermore, the transmission interposed between the magnetorheological device and the lever/pedal makes it possible, for example, for a given resistive torque applied to the pedal, to reduce the torque to be developed by the magnetorheological device, which can therefore be made with smaller dimensions, and may require the provision of less electrical power.

The pedal control device according to the present invention can be conveniently used, in particular, for controlling brakes in all-electric or hybrid drive vehicles, or for controlling the acceleration, even in vehicles powered in a conventional manner by combustion engines. Further convenient applications are possible in the driving simulator industry, in games equipment, and the like.

Further characteristics and advantages of the invention will be apparent from the following detailed description, provided purely by way of non-limiting example, with reference to the appended drawings, in which:
Figure 1 is a perspective view of a pedal control device according to the present invention;
Figure 2 is a partial perspective view which shows, on an enlarged scale, part of the pedal control device of Figure 1;
Figures 3 to 5 are partial views in lateral elevation of the pedal control assembly according to the preceding figures, with the lever/pedal in three different positions;
Figure 6 is a partial sectional view taken along the line VI-VI of Figure 2;
Figure 7 is a graph showing, as a function of the angular position of the pedal, shown on the horizontal axis, an exemplary qualitative variation of the resistive torque applied to the pedal of a pedal control device according to the invention for a hybrid drive vehicle; and
Figure 8 is a block diagram of a device according to the present invention.

In the drawings, the number 1 indicates the whole of a pedal control device, for controlling braking for example, according to the present invention.

This device 1 comprises a bearing structure 2 which is stationary in operation, made for example from a moulded plastic material.

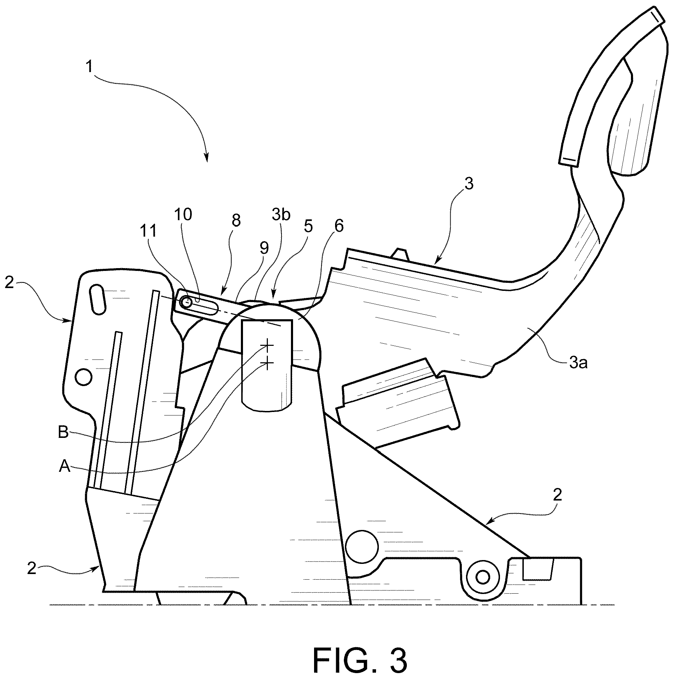

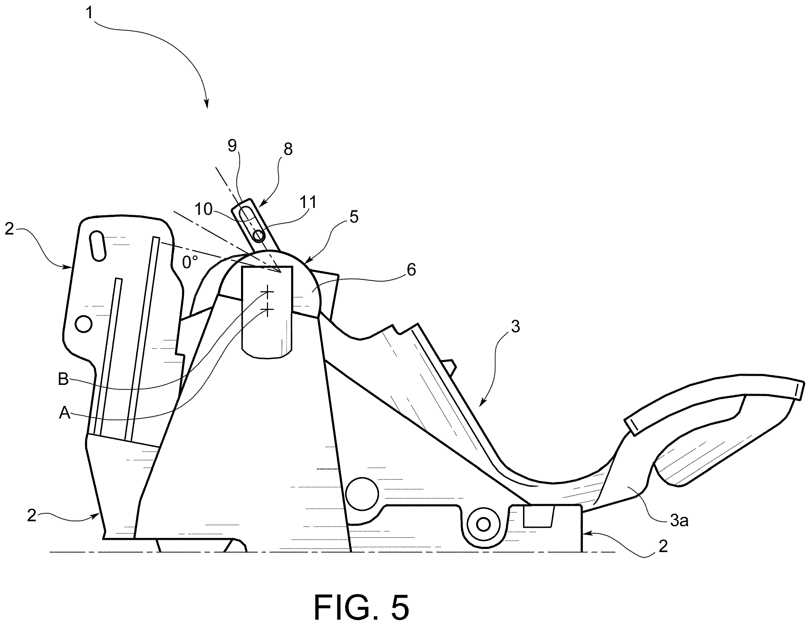

The number 3 indicates the whole of a rocker lever, mounted rotatably in the bearing structure 2 about a first horizontal axis, indicated by A in Figures 3 to 5, in a predetermined operational angular field.

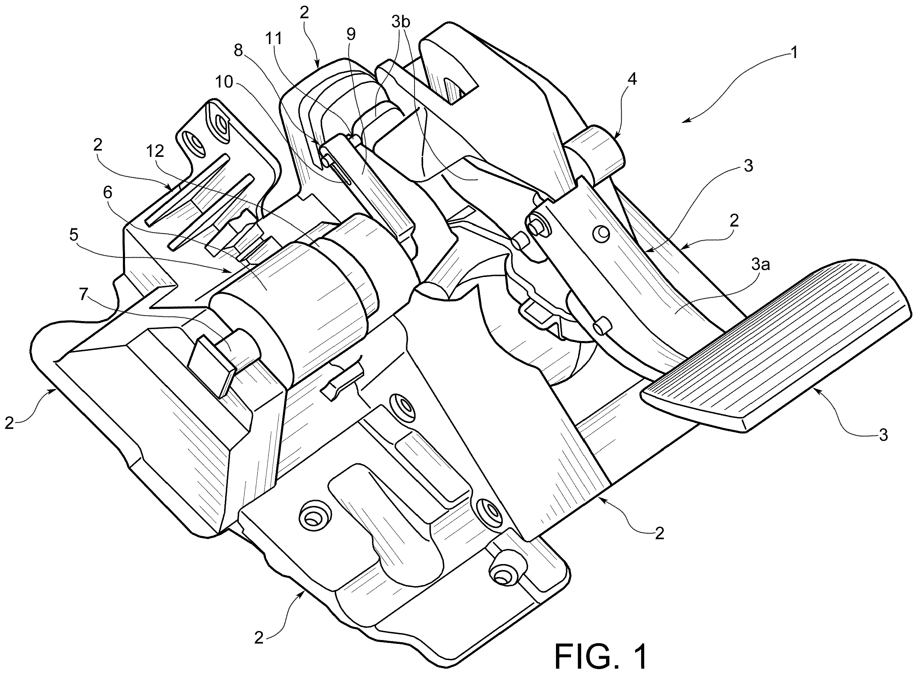

The rocker lever 3 has a first arm 3a which protrudes outside the bearing structure 2 and acts as a pedal, and a second arm 3b which extends opposite the first arm 3a with respect to the axis A (see Figures 1 to 3 in particular).

With reference to Figure 1, the rocker lever 3 has an associated electric position sensor 4 of a known type, carried by the structure 2 and adapted to provide electric signals indicative of the angular position α_{P} of this lever.

The rocker lever 3 also has an associated rotary damper device of the magnetorheological type, indicated as a whole by the number 5 in Figures 1 to 6.

In the case of application to the control of the braking of an electrically propelled vehicle, the magnetorheological damper device 5, as explained more fully below, is designed to apply a variable resistive torque C_{R} to the rocker lever 3, in particular for the simulation of the reaction at the pedal that takes place with the pedal-operated braking control devices of motor vehicles provided with a hydraulic braking system in a conventional way.

In the illustrated embodiment, the magnetorheological device 5 includes a rotation support device 6, fixed to the bearing structure 2. This support device 6 is, for example, of the type described and illustrated in US 2013/0175132A1, and contains a magnetorheological fluid.

A shaft indicated by 7 in Figures 1, 2 and 6 is supported rotatably in the support device 6, and is coupled to the rocker lever 3 via a transmission device indicated as a whole by 8 in Figures 1 to 5.

The shaft 7 is rotatable about a horizontal axis, indicated by B in Figures 3 to 6.
The axis B is parallel to the axis of rotation A of the rocker lever 3.

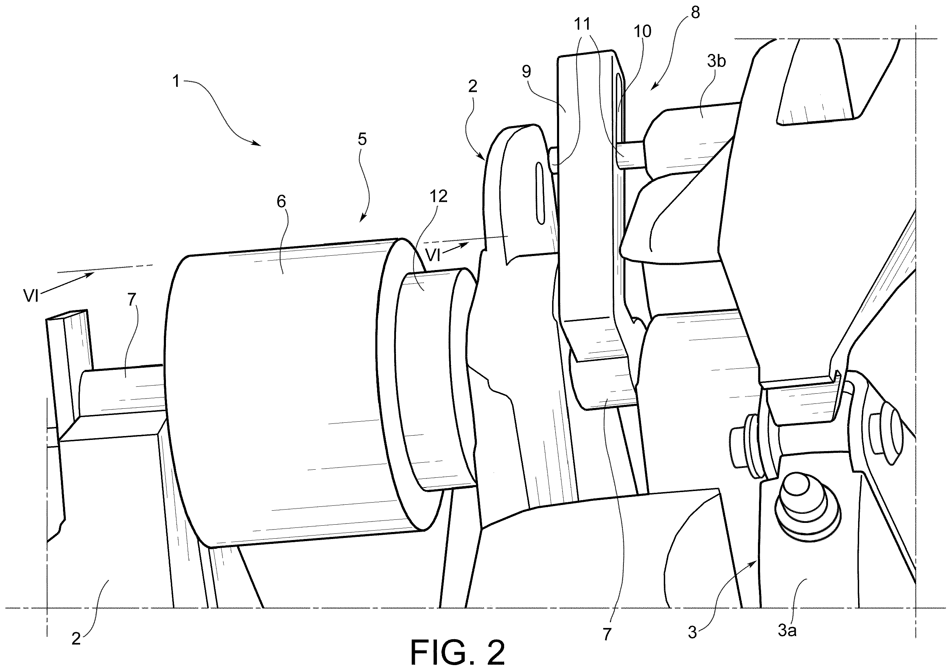

As can be seen in Figures 1 and 2 in particular, the transmission device 8 further comprises an essentially L-shaped arm 9, extending transversely from the portion of the shaft 7 located nearer to the rocker lever 3 (see Figure 2 in particular).

In the distal end of the arm 9 there is formed a slot 10, into which there extends a pin 11 protruding laterally from the arm 3b of the rocker lever 3. This pin 11 is fixed to the rocker lever 3 (Figures 1 to 5).

The combination of the pin 11 and the arm 9 forms a link motion system.

With reference to Figures 1, 2 and 6, a torque limiter device 12 of a known type is conveniently interposed between the support 5 and the transmission 8 along the shaft 7, and can disengage the rocker lever 3 from the magnetorheological damper device 5 if the latter causes a resistive torque above a predetermined threshold to be applied to the rocker lever 3. This torque limiter device 12 may be of the resettable or non-resettable type.

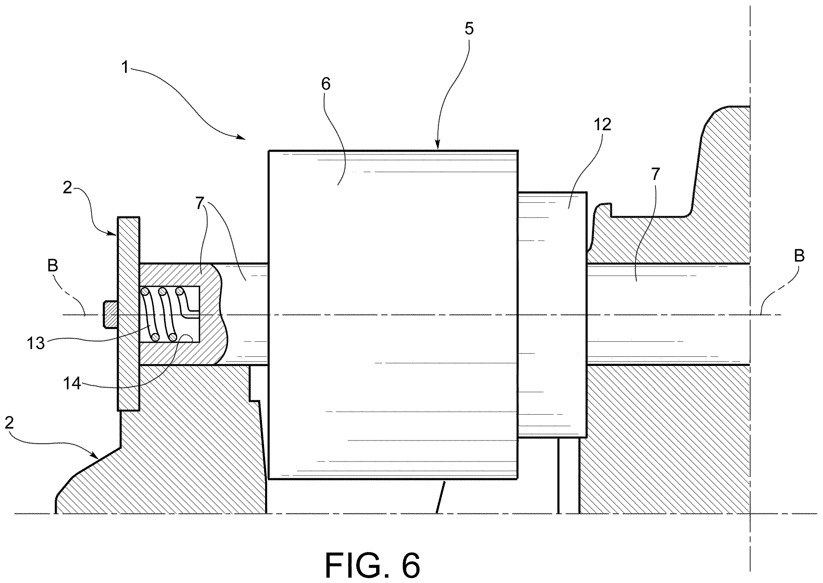

In the embodiment illustrated by way of example, as shown in Figure 6, a torsion spring 13 is interposed between the end of the shaft 7 farther from the rocker lever and the bearing structure 2, this spring being housed in a terminal recess 14 of the shaft. This spring 13 can be used to return the shaft 7 of the magnetorheological damper device 5, and, via the transmission 8, the rocker lever 3, to the rest position when this lever is released by the user's foot.

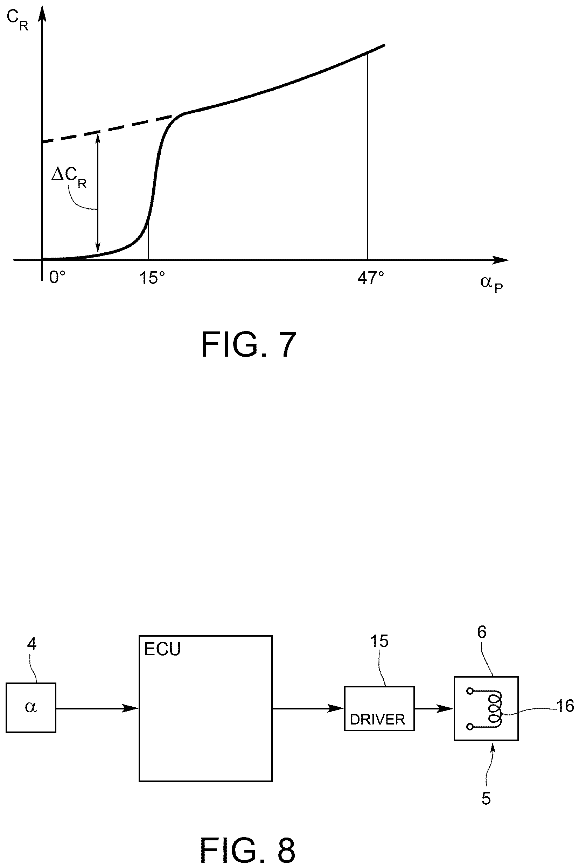

With reference to Figure 8, the pedal control device further comprises an electronic control unit ECU, which is connected to the electric angular position sensor 4 associated with the rocker lever 3.

The control unit ECU is also connected to a driver circuit device 15, by means of which the ECU can control the current supply to a winding 16 contained in the support device 6 of the magnetorheological damper 5.

The arrangement is such that, when the current supplied to the winding 16 is varied, there is a corresponding variation in the magnetic field generated by the latter and concatenated with the magnetorheological fluid of the damper device 5. Consequently there is a variation in the viscosity of the magnetorheological fluid, and a corresponding variation in the intensity of the resistive torque opposing the rotation of the shaft 7 and, via the transmission 8, the rotation of the rocker lever 3.

The electronic control unit ECU is, in particular, designed to drive the winding 16, via the driver 15, in such a way as to cause the application of a resistive torque or reaction to the rocker lever 3, this resistive torque being variable according to a predetermined function of the angular position of the lever 3.

The pedal control device 1 according to the invention essentially operates in the way that will now be described, with particular reference to the control of braking. However, the device 1 is evidently also applicable to the control of other functions or quantities, such as acceleration.

In the inactivated condition, the pedal control device 1 assumes the configuration shown in Figure 3: the rocker lever 3 is in the rest position, in which it is retained by the action of the torsion spring 13 associated with the shaft 7 of the damper device 5.

In this condition, the pin 11 fixed to the rocker lever 3 is located near the distal end of the slot 10 of the arm 9 of the transmission device 8.

If the lever 3 is now operated by the pressure of the user's foot on the arm 3a, this lever rotates about the axis A. Correspondingly, the pin 11 also rotates about the axis A, causing the arm 9 of the transmission device 8 to rotate about the axis B, that is to say about the axis of the shaft 7.

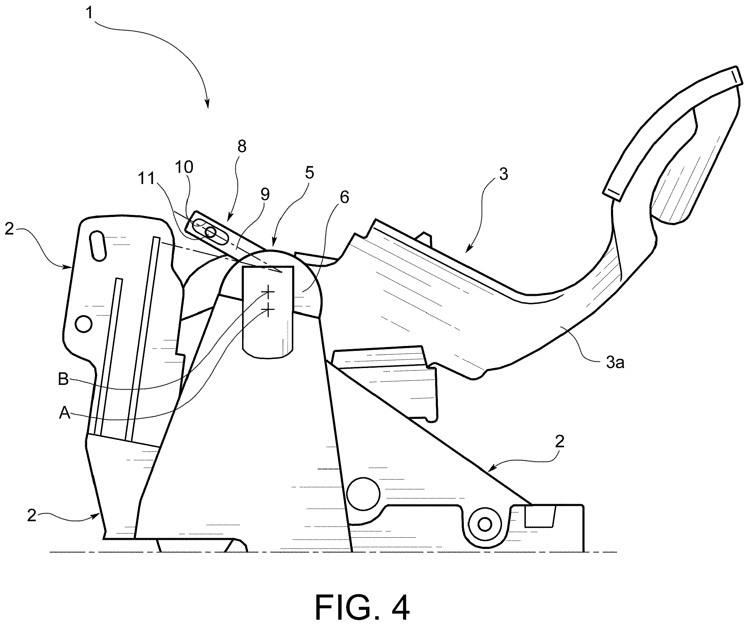

After the rocker lever 3 has completed a rotation of about 15°, for example, the pedal control device 1 assumes the configuration shown for guidance in Figure 4: the pin 11, which is fixed to the lever 3, is translated within the slot 10 of the arm 9 of the transmission device 8, towards the proximal end of said slot.

In electrically powered vehicles, including hybrid drive vehicles, in the initial phase of the rotary operation of the braking control lever the reaction (resistive torque) opposing the pedal 3 is fairly small, and in particular is markedly lower than that present in the case of vehicles provided with a conventional hydraulic braking system.

In this initial phase of the braking activation, corresponding to a rotation of the lever 3 through (for example) about 15° from the rest position (taken to be the reference position, i.e. the position at 0°), the electronic unit ECU causes the winding 16 of the magnetorheological damper device 5 to be energized, thereby causing the application to the lever 3, via the transmission device 8, of an additional resistive torque ΔC_{R} corresponding to the difference between the resistive torque which would typically be present in a hydraulic braking system, and the resistive torque which would otherwise be opposed to the rotation of the lever 3 in the absence of excitation of the magnetorheological device 5 (see the graph in Figure 7).

In a hybrid drive vehicle, after the initial phase of operation of the rocker lever 3, and therefore after the phase of "electric" braking which makes use of the electrical machine previously acting as a motor, the conventional hydraulic braking also comes into play. This hydraulic braking comprises (in a way which is not illustrated, but which is known) the application to the rocker lever 3 of a reaction torque C_{R} which increases rapidly and follows the variation shown in solid lines in the graph in Figure 7, possibly up to the limit position of the rocker lever 3, which in the example illustrated in Figure 7 is located at about 47° relative to the rest position (0°).

In the example illustrated with reference to Figure 7, during the hydraulic braking the ECU associated with the braking control device 1 de-energizes the winding 16 of the magnetorheological device 5 and keeps it de-energized.

Subsequently, when the rocker lever 3 is released by the user's foot, this lever is returned towards the angular rest position, initially under the combined action of the reaction of the hydraulic braking circuit and the torsion spring 13, and then (starting from the position at about 15° and continuing to the rest position, or 0°) by the action of the torsion spring 13 alone.

In its application to a hybrid drive vehicle, the braking control device 1 according to the invention can therefore be used to modify the haptic sensation in the user's foot, either in the initial phase of operation of the rocker lever 3 only, or until the hydraulic braking takes over.

In a purely electrically propelled vehicle, having no hydraulic braking system, the pedal control device 1 according to the invention can be used to correct the reaction at the pedal over the whole operational rotation of the rocker lever 3.

If the magnetorheological damper device 5 is blocked or fails during its operation, the torque limiter device 12 disengages the coupling between the rocker lever 3 and the damper device 5, enabling the rocker lever 3 to rotate so as to allow braking to take place regardless.

In the illustrated embodiment, the transmission device 8 interposed between the magnetorheological damper device 5 and the rocker lever 3 is such that, when said lever 3 is operated, its angular velocity is different from and in particular less than, the rotation velocity of the shaft 7 of the damper device 5. Because of this characteristic, in order to apply a predetermined resistive torque to the rocker lever 3, the magnetorheological damper device 5 must develop a smaller resistive torque. The magnetorheological device 5 can therefore be made with smaller dimensions, and requires a smaller electrical power supply.

The detection of the angular position α_{P} of the lever 3 can be provided by means of a sensor associated with the lever, or by means of a sensor associated with the shaft 7 of the magnetorheological device 5. In this case, if the angular velocity of this shaft is greater than that of the lever 3, the (indirect) detection of the angular position of this lever takes place with better resolution.

The pedal control device according to the invention can conveniently be applied not only on board vehicles, but also in driving simulators, games equipment, and the like.

Clearly, provided that the principle of the invention is retained, the forms of application and the details of embodiment can be varied widely from what has been described and illustrated purely by way of non-limiting example, without thereby departing from the scope of the invention as defined by the attached claims.

## Claims

1. Pedal control device (1) particularly for a motor vehicle, comprising
a bearing structure (2) which is stationary in operation,
a rocker lever (3) mounted rotatably in the bearing structure (2) about a first axis (A) in a predetermined operational angular field, and having a first arm (3a) which protrudes from said structure (2) and acts as a pedal, and a second arm (3b) which extends opposite the first arm (3a) with respect to said first axis (A);
an electric position sensor (4) connected to said bearing structure (2) and adapted to provide electric signals indicative of the angular position (α_{P}) of said lever (3);
a magnetorheological device (5) adapted to apply a variable resistive torque (C_{R}) to said lever (3) and including a support device (6) which is fixed to the bearing structure (2) and contains a magnetorheological fluid, and wherein there is rotatably supported a shaft (7) which is coupled to said lever (3) in such a way that a rotation of the lever (3) can cause a corresponding rotation of said shaft (7); the support device (6) having associated variable magnetic field generator means (16) adapted to modify the viscosity of said magnetorheological fluid and the resistive torque (C_{R}) applied to said lever (3); and
an electronic control unit (ECU) connected to said angular position sensor (4) and designed to drive said magnetic field generator means (16) in accordance with a predetermined function of the angular position (α_{P}) of said lever (3);
the pedal control device (1) being **characterized in that** said shaft (7) is rotatable about a second axis (B) parallel with and offset from said first axis (A), and **in that** between said shaft (7) and the rocker lever (3) there is interposed a transmission (8) which is designed so that when the rocker lever (3) is operated, its rotation speed is different from, and in particular lower than, the rotation speed of said shaft (3).

2. Pedal control device according to Claim 1, wherein said transmission (8; 9-11) is of the link motion type.

3. Pedal control device according to Claim 2, wherein said transmission (8) comprises an arm (9) which extends transversely from said shaft (7) and is provided with a slot (10) in which is engaged a pin (11) or the like, which is fixed to one arm (3b) of the rocker lever (3).

4. Pedal control device according to one of the preceding claims, wherein a torque limiter device (12) is interposed between the magnetorheological device (5) and the rocker lever (3) on said shaft (7).

5. Pedal control device according to any of the preceding claims, wherein said shaft (7) has associated resilient return means (13) tending to make said shaft (7) and the rocker lever (3) rotate toward a predetermined rest position.

6. Pedal control device according to any of the preceding claims, wherein said electric position sensor (4) is associated with said shaft (7) and provides signals indicative of the angular position of said shaft (7), and the control unit (ECU) is designed to deduce the angular position (α_{P}) of said rocker lever (3) from said signals.

## Patentansprüche

1. Pedalsteuerungsvorrichtung (1) insbesondere für ein Motorfahrzeug, mit
einer Lagerstruktur (2), die im Betrieb stationär ist,
einem Kipphebel (3), der um eine erste Achse (A) in einem vorherbestimmten Betriebswinkelfeld drehbar in der Lagerstruktur (2) montiert ist und einen ersten Arm (3a), der von besagter Struktur (2) vorsteht und als ein Pedal wirkt, und einen zweiten Arm (3b), der sich entgegengesetzt zu dem ersten Arm (3a) in Bezug auf besagte erste Achse (A) erstreckt, aufweist;
einem elektrischen Positionssensor (4), der mit besagter Lagerstruktur (2) verbunden ist und dazu angepasst ist, elektrische Signale, die die Winkelposition (ap) besagten Hebels (3) angeben, zur Verfügung zu stellen;
einer magnetorheologischen Vorrichtung (5), die dazu angepasst ist, ein variables Widerstandsdrehmoment (C_{R}) auf besagten Hebel (3) auszuüben, und die eine Lagervorrichtung (6) aufweist, die an der Lagerstruktur (2) befestigt ist und ein magnetorheologisches Fluid enthält, und bei der eine Welle (7), die an besagten Hebel (3) in einer derartigen Weise gekoppelt ist, dass eine Drehung des Hebels (3) eine entsprechende Drehung besagter Welle (7) bewirken kann, drehbar gelagert ist; welche Lagervorrichtung (6) assoziierte variable Magnetfeldgeneratormittel (16) aufweist, die dazu angepasst sind, die Viskosität besagten magnetorheologischen Fluids und das Widerstandsdrehmoment (C_{R}), das auf besagten Hebel (3) ausgeübt wird, zu modifizieren; und
einer elektronischen Steuerungseinheit (ECU), die mit besagtem Winkelpositionssensor (4) verbunden ist und dazu ausgebildet ist, besagte Magnetfeldgeneratormittel (16) entsprechend einer vorherbestimmten Funktion der Winkelposition (ap) besagten Hebels (3) anzusteuern; welche Pedalsteuerungsvorrichtung (1) **dadurch gekennzeichnet ist, dass** besagte Welle (7) um eine zweite Achse (B) parallel zu und versetzt von besagter erster Achse (A) drehbar ist, und dadurch, dass zwischen besagter Welle (7) und dem Kipphebel (3) ein Getriebe (8) eingefügt ist, das so ausgebildet ist, dass, wenn der Kipphebel (3) betätigt wird, seine Drehzahl anders als, und insbesondere geringer als die Drehzahl besagter Welle (3) ist.

2. Pedalsteuerungsvorrichtung nach Anspruch 1, bei der besagtes Getriebe (8; 9-11) von dem Kulissensteuerungstyp ist.

3. Pedalsteuerungsvorrichtung nach Anspruch 2, bei der besagtes Getriebe (8) einen Arm (9) aufweist, der sich quer von besagter Welle (7) erstreckt und mit einem Schlitz (10) vorgesehen ist, in dem ein Stift (11) oder dergleichen in Eingriff ist, der an einem Arm (3b) des Kipphebels (3) befestigt ist.

4. Pedalsteuerungsvorrichtung nach einem der vorhergehenden Ansprüche, bei der eine Drehmomentbegrenzervorrichtung (12) zwischen der magnetorheologischen Vorrichtung (5) und dem Kipphebel (3) besagter Welle (7) eingefügt ist.

5. Pedalsteuerungsvorrichtung nach einem der vorhergehenden Ansprüche, bei der besagte Welle (7) assoziierte elastische Rückkehrmittel (13) aufweist, die dazu tendieren, besagte Welle (7) und den Kipphebel (3) dazu zu bringen, sich in Richtung auf eine vorherbestimmte Ruheposition zu drehen.

6. Pedalsteuerungsvorrichtung nach einem der vorhergehenden Ansprüche, bei der besagter elektrischer Positionssensor (4) mit besagter Welle (7) assoziiert ist und Signale zur Verfügung stellt, die die Winkelposition besagter Welle (7) angeben, und die Steuerungseinheit (ECU) dazu ausgebildet ist, die Winkelposition (ap) besagten Kipphebels (3) aus besagten Signalen abzuleiten.

## Revendications

1. Dispositif de commande à pédale (1) en particulier pour un véhicule automobile, comprenant
une structure porteuse (2) qui est fixe en fonctionnement,
un levier à bascule (3) monté de manière à pouvoir tourner dans la structure porteuse (2) autour d'un premier axe (A) dans un champ angulaire opérationnel prédéterminé, et ayant un premier bras (3a) qui fait saillie depuis ladite structure (2) et sert de pédale, et un second bras (3b) qui s'étend à l'opposé du premier bras (3a) par rapport audit premier axe (A) ;
un capteur de position électrique (4) connecté à ladite structure porteuse (2) et adapté pour fournir des signaux électriques indicatifs de la position angulaire (α_{P}) dudit levier (3) ;
un dispositif magnétorhéologique (5) adapté pour appliquer un couple résistif variable (C_{R}) audit levier (3) et incluant un dispositif de support (6) qui est fixé sur la structure porteuse (2) et contient un fluide magnétorhéologique, et dans lequel est supporté en rotation un arbre (7) qui est couplé audit levier (3) d'une manière telle qu'une rotation du levier (3) peut provoquer une rotation correspondante dudit arbre (7) ; le dispositif de support (6) ayant un moyen de génération de champ magnétique variable associé (16) adapté pour modifier la viscosité dudit fluide magnétorhéologique et le couple résistif (C_{R}) appliqué audit levier (3) ; et
une unité de commande électronique (UCE) connectée audit capteur de position angulaire (4) et conçue pour entraîner ledit moyen de génération de champ magnétique (16) conformément à une fonction prédéterminée de la position angulaire (α_{P}) dudit levier (3) ;
le dispositif de commande à pédale (1) étant **caractérisé en ce que** ledit arbre (7) peut tourner autour d'un second axe (B) parallèle audit premier axe (A) et décalé par rapport à celui-ci, et **en ce qu'**entre ledit arbre (7) et ledit levier à bascule (3) est intercalée une transmission (8) qui est conçue de telle sorte que, lorsque le levier à bascule (3) est actionné, sa vitesse de rotation est différente de la vitesse de rotation dudit arbre (3), et en particulier inférieure à celle-ci.

2. Dispositif de commande à pédale selon la revendication 1, dans lequel ladite transmission (8 ; 9-11) est du type à mouvement de liaison.

3. Dispositif de commande à pédale selon la revendication 2, dans lequel ladite transmission (8) comprend un bras (9) qui s'étend transversalement depuis ledit arbre (7) et est pourvu d'une fente (10) dans laquelle est enclenchée une tige (11) ou autre, qui est fixée à un bras (3b) du levier à bascule (3).

4. Dispositif de commande à pédale selon l'une des revendications précédentes, dans lequel un dispositif de limitation de couple (12) est intercalé entre le dispositif magnétorhéologique (5) et le levier à bascule (3) sur ledit arbre (7).

5. Dispositif de commande à pédale selon l'une des revendications précédentes, dans lequel ledit arbre (7) comporte un moyen de rappel élastique associé (13) ayant tendance à amener ledit arbre (7) et le levier à bascule (3) à tourner vers une position de repos prédéterminée.

6. Dispositif de commande à pédale selon l'une des revendications précédentes, dans lequel ledit capteur de position électrique (4) est associé audit arbre (7) et fournit des signaux indicatifs de la position angulaire dudit arbre (7), et l'unité de commande (UCE) est conçue pour déduire la position angulaire (α_{P}) dudit levier à bascule (3) à partir desdits signaux.
